# EUROPÄISCHE PATENTSCHRIFT

(11) **EP 0 532 492 B1**
(45) Veröffentlichungstag und Bekanntmachung des Hinweises auf die Patenterteilung: **10.07.1996**
(21) Anmeldenummer: 92890192.5
(22) Anmeldetag: 08.09.1992
(51) Int. Cl.: A01B 17/00, A01B 71/06

(54) **Pflug mit einer Antriebseinrichtung**
Plough with a driving device
Charrue comportant un dispositif d'entraînement

(30) Priorität: 10.09.1991 AT 1797/91
(43) Veröffentlichungstag der Anmeldung: 17.03.1993
(73) Patentinhaber: Schiefermair, Augustinus, A-4521 Schiedlberg (AT)
(72) Erfinder: Schiefermair, Augustinus, A-4521 Schiedlberg (AT)
(74) Vertreter: Petra, Elke, Dipl.-Ing.

(56) Entgegenhaltungen:
- EP-A- 0 428 495
- AT-B- 387 127
- DE-A- 2 014 366
- DE-A- 2 156 435
- GB-A- 1 023 636
- GB-A- 1 512 480

## Beschreibung

Die Erfindung betrifft einen Pflug, insbesondere Drehpflug, wobei der Pflug mit mindestens einer Pflugschar versehen ist, welche an ein Grindel angeschlossen ist, das mit einem Pfluganbaubock od.dgl. für den Anschluß des Pfluges an einen Traktor verbunden ist, sowie mindestens ein, jedem Pflugkörper jeder Pflugschar furchenseitig zugeordnetes Zerkleinerungswerkzeug aufweist, welches eine über ein Getriebe angetriebene Antriebswelle aufweist.

Bei Pflügen mit Antriebseinrichtungen wie vorstehend erwähnt und beispielsweise in der DE-OS 2 156 435 beschrieben, bestand die Schwierigkeit, den Antrieb vom Traktor zur Zapfwelle zu lösen, da für diesen Antrieb der Pfluganbaubock od.dgl. im Wege stand. Bei einem ähnlichen, in der GB-PS 1 023 636 beschriebenen Gerät, bei dem lediglich ein rotierendes Werkzeug am hinteren Ende des Pfluges vorgesehen ist, wird die Antriebswelle, mit mehreren Gelenken versehen, tiefer als der Pfluganbaubock zu einem am hinteren Ende des Pfluges angeordneten Getriebe geführt. Dies bedingt eine hohe Gewichtsbelastung des Pfluges und Schwierigkeiten beim Ausheben des Pfluges.

Die Erfindung hat zur Aufgabe, diese Probleme zu lösen und erzielt dies dadurch, daß erfindungsgemäß das Getriebe, Vorgelege od.dgl. an der dem Grindel abgewandten Seite, vor dem Anbaubock zur lösbaren Anbringung an dem Traktor angeordnet ist, wobei die Abtriebswelle des Getriebes tiefer als der Pfluganbaubock liegt und mit der Antriebswelle für das Zerkleinerungswerkzeug antriebsmäßig verbunden ist. Damit sind bei einem Pflug der eingangs erwähnten Art in vorteilhafter Weise beide oben angeführten Nachteile der herkömmlichen Konstruktionen beseitigt.

Bei Drehpflügen treten im Zusammenhang mit dem Antrieb der Zerkleinerungswerkzeuge Probleme auf, deren Ursache in der Ortsveränderung des Antriebes für die Zerkleinerungswerkzeuge beim Drehen des Pfluges gelegen ist. Bei einem erfindungsgemäßen, als Drehpflug ausgebildeten Pflug wird erfindungsgemäß ein problemloses Drehen des Pfluges ausschließlich dadurch bewirkt, daß die Antriebswelle frei verlaufend - sohin ohne Lagerungen - unterhalb des Anbaubockes angeordnet ist.

Weitere Merkmale und Vorteile der Erfindung werden anhand der Zeichnung näher erläutert, in welcher ein Ausführungsbeispiel der Antriebseinrichtung für einen Drehpflug dargestellt ist. Es zeigen,
Fig. 1 eine Rückansicht eines dreischarigen Drehpfluges mit der erfindungsgemäßen Antriebseinrichtung,
Fig. 2 in schaubildlicher Darstellung die Antriebseinrichtung in größerem Maßstab, und
Fig. 3 ein Detail der in Fig. 2 dargestellten Einrichtung.

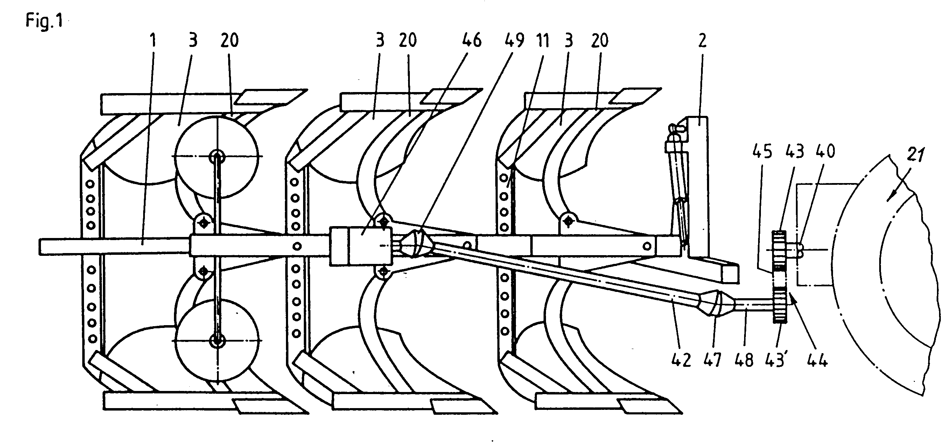

In der Zeichnung sind mit 3 die Pflugscharen - im vorliegenden Ausführungsbeispiel drei Doppelpflugscharen - bezeichnet, welche über ein Grindel 1 an einem in nicht dargestellter Weise mit dem Traktor 21 verbundenen Pfluganbaubock 2 od.dgl. drehbar verbunden sind. Jede der Pflugscharen 3 besitzt zwei einander gegenüberliegende Pflugkörper 20 bzw. Streichbleche, die entlang von Vertikalführungen 11 wechselweise in Arbeitsstellung gebracht werden. Jeder Pflugschar 3 des Pflugkörpers 20 ist ein Zerkleinerungswerkzeug 4 zugeordnet, welches in Fig. 1 der Übersichtlichkeit halber nicht dargestellt ist. Die Zerkleinerungswerkzeuge 4 dienen zur Zerkleinerung und Verteilung der von den Pflugkörpern 20 bzw. Streichblechen aufgeworfenen Erde und schließen an den jeweils abgesenkten Pflugkörper 20 an. Die Zerkleinerungswerkzeuge 4 sind im dargestellten Ausführungsbeispiel als Zinkenräder ausgebildet, welche auf einer ihnen gemeinsamen, antreibbaren Welle 6 sitzen, die von einer Traktorzapfwelle 40 über ein Getriebe 44, das ein Vor- und Rückganggetriebe sein kann, weiters über eine Antriebswelle 42 und ein weiteres Getriebe 33 angetrieben wird. Das traktorseitige Getriebe 44 ist mit der Zapfwelle 40 des Traktors 21 lösbar verbunden, sodaß es je nach Bedarf an den Traktor angesetzt oder abgenommen werden kann. Das Getriebe 44 ist darüberhinaus so ausgebildet, daß es von der Zapfwelle 40 nach unten unterhalb des Pfluganbaubocks 2 reicht, wo auch die Abtriebswelle 48 des traktorseitigen Getriebes 44 zu liegen kommt. Im vorliegenden Fall ist dieses Getriebe 44 aus zwei Kettenrädern 43, 43′ und einer diese verbindenden Kette 45 aufgebaut, wobei das obere Kettenrad 43 mit der Zapfwelle 40 des Traktors 21 und das untere Kettenrad 43′ mit der Abtriebswelle 48 verbunden ist. Selbstverständlich kann außer der dargestellten und soeben beschriebenen Variante, das Getriebe 44 noch ein Vorgelege umfassen und aus Zahnrädern, Kettenrädern od.dgl. in geeigneter Kombination bestehen.

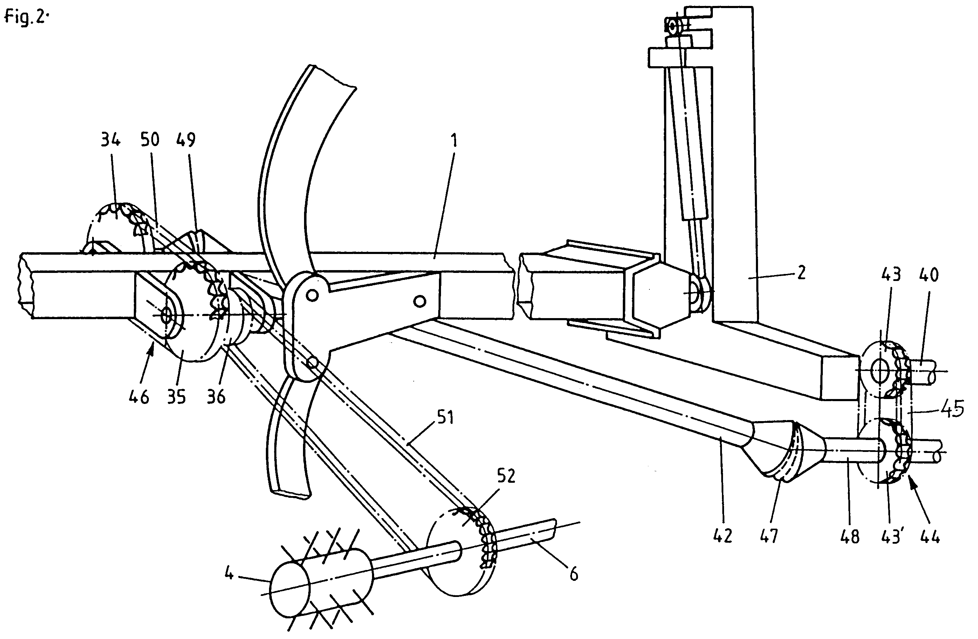

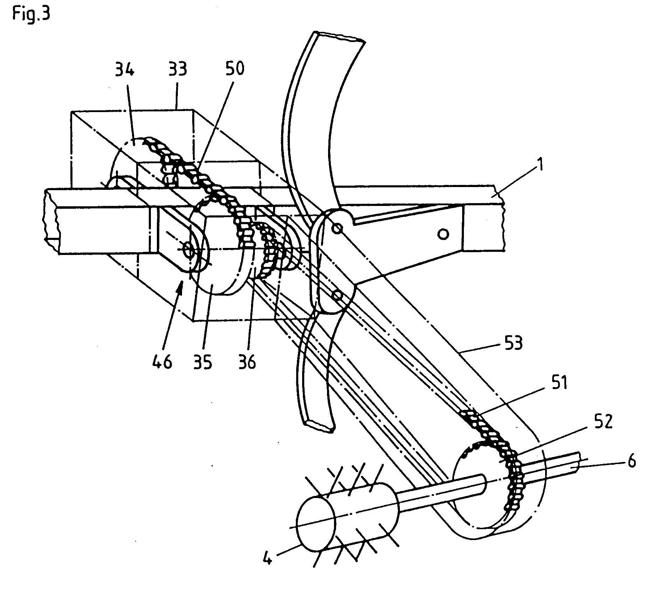

Die Abtriebswelle 48 des traktorseitigen Getriebes 44 treibt über ein Gelenk 47 eine schräg nach oben verlaufende Antriebswelle 42 an, die ihrerseits über ein Gelenk 49 ein Getriebe 46 antreibt, welches zu beiden Seiten des Grindels 1 je ein Kettenrad 34 bzw. 35 aufweist. Die beiden Kettenräder 34, 35 sind durch eine Kette 50 verbunden, wie dies die Fig. 2 und 3 zeigen, welche die Antriebseinrichtung für die Zerkleinerungswerkzeuge 4 in größerem Maßstab und perspektivischer Ansicht darstellen. Eines der Kettenräder des am Grindel 1 angebrachten Getriebes 46 ist antriebsmäßig mit einem weiteren Kettenrad 36 verbunden, welches über eine Kette 51 und ein weiteres Kettenrad 52 die Welle 6 der Zerkleinerungswerkzeuge 4 antreibt. Der Antrieb der Welle 6 erfolgt in der Richtung, daß die Zerkleinerungswerkzeuge 4 die zerkrümelten Erdteile von den Pflugscharen 3 wegtransportieren.

In der ein Detail der Einrichtung nach Fig. 2 darstellenden Fig. 3 sind die Ketten 50 und 51 gemäß einer vorteilhaften Ausführungsform durch Schutzgehäuse gegenüber mechanischen Beschädigungen, Eindringen von Feuchtigkeit und Staub etc. geschützt, um damit verbundene Betriebsstörungen zu vermeiden. Das Getriebe 46 mit den Kettenrädern 34, 35, 36 ist durch ein am Grindel 1 befestigtes Gehäuse 33 und die Kette 51 sowie das Kettenrad 52 auf der Welle 6 der Zerkleinerungswerkzeuge 4 durch ein längliches Gehäuse 53, welches bis zum Grindel 1 bzw. bis zum Gehäuse 33 reicht, geschützt.

Selbstverständlich ist die Ausbildung der Zerkleinerungswerkzeuge 4 nicht auf die dargestellte Ausbildung als Zinkenräder beschränkt, sondern je nach Bodenbeschaffenheit oder anderen Kriterien sind Zinken beliebiger Ausformung, Platten, Bleche, Bürsten etc. möglich. Auch für die antriebsmßige Verbindung der Getrieberäder innerhalb der Getriebe bzw. die Verbindung zwischen dem Getriebe 46 und der Welle 6 der Zerkleinerungswerkzeuge 4 sind nicht nur Ketten, sondern beispielsweise auch Zahnriemen od.dgl. ausführbar. Auch für die antriebsmäßige Verbindung innerhalb der Getriebe sind direkte Zahnradverbindungen möglich. Bei Drehpflügen erfolgt das Drehen des Pfluges unabhängig von der Zapfwelle, welche nur für den Drehantrieb des Zerkleinerungswerkzeuges genutzt wird. Die Schaltung des traktorseitigen Vor- und Rückganggetriebes 44 erfolgt von Hand aus oder wird automatisch beim Drehen des Pfluges betätigt. Durch die Anordnung der Antriebswelle 42 unterhalb des Anbaubockes 2 frei verlaufend ist ein ausschließlich problemloses Drehen des Pfluges möglich. Allerdings ist die erfindungsgemäße Konstruktion nicht nur für Drehpflüge, sondern auch für Beetpflüge oder andere Pflüge anwendbar, wobei dann das Yaktorseitige Getriebe 44 kein Vor- und Rückganggetriebe sein muß, sondern nur mehr ein gewöhnliches, in einer Richtung arbeitendes Getriebe erforderlich ist, wie überhaupt in diesem Fall ein Drehrichtungsumkehrgetriebe nicht notwendig ist.

## Patentansprüche

1. Pflug, insbesondere Drehpflug, mit einer Antriebseinrichtung, wobei der Pflug mit mindestens einer Pflugschar (3) versehen ist, welche an ein Grindel (1) angeschlossen ist, das mit einem Pfluganbaubock (2) od.dgl. für den Anschluß des Pfluges an einen Traktor (21) verbunden ist, sowie mindestens ein, jedem Pflugkörper (20) jeder Pflugschar (3) furchenseitig zugeordnetes Zerkleinerungwerkzeug (4) aufweist, welches eine über ein Getriebe (44) angetriebene Antriebswelle (42) aufweist, dadurch gekennzeichnet, daß das Getriebe (44), Vorgelege od.dgl. an der dem Grindel (1) abgewandten Seite, vor dem Anbaubock (2) zur lösbaren Anbringung an dem Traktor angeordnet ist, wobei die Abtriebswelle (48) des Getriebes (44) tiefer als der Pfluganbaubock (2) liegt und mit der Antriebswelle (42) für das Zerkleinerungswerkzeug (4) antriebsmäßig verbunden ist.

2. Pflug nach Anspruch 1, ausgebildet als Drehpflug, dadurch gekennzeichnet, daß die Antriebswelle (42) frei verlaufend unterhalb des Anbaubockes (2) angeordnet ist, wobei ausschließlich dadurch ein problemloses Drehen des Pfluges bewirkbar ist.

3. Pflug nach Anspruch 1, dadurch gekennzeichnet, daß die Abtriebswelle (48) des Getriebes (44) über ein Gelenk (47) antriebsmäßig mit der Antriebswelle (42) für das Zerkleinerungswerkzeug (4) verbunden ist.

## Claims

1. Plough, especially a turnover plough, having a drive device, the plough being provided with at least one ploughshare (3) attached to a ploughbeam (1) which is connected to a plough attachment yoke (2) or the like for attaching the plough to a tractor (21), and having at least one comminuting tool (4) associated on the furrow side with each plough body (20) of each ploughshare (3), which comminuting tool (4) has a drive shaft (42) driven by way of a gear mechanism (44), **characterised in that** the gear mechanism (44), transmission or the like is arranged on the side remote from the ploughbeam (1) in front of the attachment yoke (2) for the purpose of releasable attachment to the tractor, the output shaft (48) of the gear mechanism (44) being arranged at a lower level than the plough attachment yoke (2) and being in driving connection with the drive shaft (42) for the comminuting tool (4).

2. Plough according to claim 1, constructed in the form of a turnover plough, **characterised in that** the drive shaft (42) is arranged to extend unattached below the attachment yoke (2), troublefree turning of the plough being obtainable by that on its own.

3. Plough according to claim 1, **characterised in that** the output shaft (48) of the gear mechanism (44) is in driving connection by way of a joint (47) with the drive shaft (42) for the comminuting tool (4).

## Revendications

1. Charrue, en particulier charrue brabant, avec un dispositif d'entraînement, la charrue étant munie d'au moins un soc de charrue (3) qui se raccorde à un timon (1), qui est reliée à un chevalet porté (2) ou analogue destiné au raccordement de la charrue à un tracteur (21), et qui présente au moins un outil de fragmentation (4) associé à chaque corps de charrue (20) de chaque soc de charrue (3) côté sillon, outil qui présente un arbre d'entraînement (42) entraîné par un train d'engrenages (44), caractérisée en ce que le train d'engrenages (44), transmission intermédiaire ou analogue est placée du côté opposé au timon (1) devant le chevalet porté (2), pour le raccordement amovible sur le tracteur, l'arbre d'entraînement (48) du train d'engrenages (44) se trouvant plus bas que le chevalet porté (2) et étant relié en entraînement à l'arbre d'entraînement (42) de l'outil de fragmentation (4).

2. Charrue selon la revendication 1, conformée en charrue brabant, caractérisée en ce que l'arbre d'entraînement (42) est placé en libre rotation au-dessous du chevalet porté (2), cela exclusivement pouvant provoquer une rotation sans problème de la charrue.

3. Charrue selon la revendication 1, caractérisée en ce que l'arbre d'entraînement (48) du train d'engrenage (44) est relié en entraînement à l'arbre d'entraînement (42) de l'outil de fragmentation (4) par l'intermédiaire d'une articulation (47).
